# EUROPEAN PATENT APPLICATION

(11) **EP 3 805 624 A1**
(43) Date of publication of application: **14.04.2021**
(21) Application number: 19815756.2
(22) Date of filing: 09.01.2019
(51) Int. Cl.: F16L 17/03, F16J 15/02

(54) **SEALING MEMBER FOR PIPE CONNECTION**

(30) Priority: 08.06.2018 KR 20180066303
(71) Applicant: Jungwoo Metal Ind. Co., Ltd., Yangju-si, Gyeonggi-do 11407 (KR)
(72) Inventor: LEE, Kwang Won, Yangju-si, Gyeonggi-do 11407 (KR)
(74) Representative: Ter Meer Steinmeister & Partner
(86) International application number: PCT/KR2019/000341
(87) International publication number: WO 2019/235709

(57) **Abstract**

The present invention provides a sealing member for pipe connection, which comprises: a body part disposed between the outer surface of a pipe and the inner surface of a connector into which the pipe is inserted, and formed to extend along the circumferential direction thereof in a ring shape; and wing parts formed on the body part to protrude from areas, which come in contact with the outer surface of the pipe, and disposed along both sides of the width direction of the body part to be spaced apart from each other, wherein the wing parts are configured to be deformable by external force in a state where each of the wing parts is in linear contact with the outer surface of the pipe.

## Description

### Technical Field

The present invention relates to a sealing member for pipe connection, and more particularly, to a sealing member for pipe connection in which a pair of spaced wing parts is formed to greatly improve a water stop force.

### Background Art

In general, pipe connectors have been used to connect various types of pipes that are constructed in construction and civil engineering, and these pipe connectors are formed in various shapes according to the size and type of the pipe.

In the case of a large-diameter pipe connector, an accommodation space is formed inside a connector into which the pipe is inserted, and the accommodation space is provided with a water stop ring and a grip ring. Accordingly, the pipe is inserted into the connector and then the grip ring is compressed to penetrate into the outer surface of the pipe to fix the pipe.

In the case of a small-diameter pipe connector, a method has been used in which a water stop ring is inserted into a groove formed along an inner circumference of the connector into which the pipe is inserted, and then the pipe is inserted and connected. In this case, the water stop ring presses the outer surface of the pipe, and prevents leakage of a fluid flowing inside the pipe.

However, since the water stop ring used for the conventional small-diameter pipe connector is formed in a simple ring shape, it is difficult to obtain a complete water stop effect when the inner surface thereof is not formed in a completely circular shape. That is, the processing of the water stop ring needs to be made very precisely, but due to the practical limitations of the manufacturing process, the inner surface of the water stop ring is difficult to form a complete circle, and there is a problem that the quality variation increases.

In addition, since continuous friction is applied only to the inner surface of the water stop ring due to the entrance and exit of the pipe during the connection process, there is a problem in that abrasion is easily generated.

Therefore, there is a need for a method for solving such problems.

### Disclosure/Technical Problem

The present invention is an invention derived to solve the problems of the prior art described above, and an object of the present invention is to provide a sealing member for pipe connection that significantly improves a water stop force by increasing an area in contact with the pipe.

In addition, an object of the present invention is to provide a sealing member for pipe connection that greatly increases the life by minimizing the occurrence of abrasion caused due to the fastening by reducing contact points when fastened with the pipe.

The objects of the present invention are not limited to the aforementioned objects, and other objects, which are not mentioned above, will be apparent to a person having ordinary skill in the art from the following description.

### Technical Solution

In order to achieve the objects, a sealing member for pipe connection including a protrusion of the present invention comprises: a body part disposed between the outer surface of a pipe and the inner surface of a connector into which the pipe is inserted, and formed to extend along the circumferential direction thereof in a ring shape; and wing parts formed on the body part to protrude from areas, which come in contact with the outer surface of the pipe, and disposed along both sides of the width direction of the body part to be spaced apart from each other, wherein the wing parts are configured to be deformable by external force in a state where each of the wing parts is in linear contact with the outer surface of the pipe.

In addition, the wing parts may be formed to be elongated along the longitudinal direction of the body part.

In addition, the sealing member for pipe connection may further include an inner protrusion positioned in a first region between the wing parts in the body part and formed to protrude in the outer surface direction of the pipe.

In addition, at least one or more inner protrusions may be configured to be spaced apart from each other.

In addition, the inner protrusion may be formed such that a protruding height thereof is gradually increased toward the center from the wing parts on both sides.

In addition, the sealing member may further include an outer protrusion protruding from a second region in contact with the inner surface of the connector on the body part and formed along the longitudinal direction of the body part.

In addition, the inner protrusion and the outer protrusion may form an endless orbit, surround the circumference of the wing parts together, and are connected to each other in a spiral shape to be formed along the outer surface of the body part.

In addition, the protruding height of the inner protrusion may be relatively larger than that of the outer protrusion on the body part.

In addition, the sealing member may further include at least one sealing part configured between the wing parts to protrude toward the pipe.

In addition, the sealing parts may have the same cross-sectional shape, and may be formed to be elongated along the longitudinal direction of the body part.

In addition, the protruding height of the sealing part may be formed to be relatively higher than that of the wing parts.

### Advantageous Effects

The sealing member for pipe connection of the present invention for solving the above problems has the following effects.

First, there is an advantage in that spiral-shaped inner protrusion and outer protrusion are formed along the entire circumference of the sealing member to remarkably improve a water stop force.

Second, when contacting the pipe, since the inner protrusion comes in linear contact with the pipe in multiple together with the wing parts, a contact area with the pipe is small, and thus, there are advantages of reducing the burden on precision processing and having little variation in quality.

Third, since the contact surface with the pipe is extremely small, there is an advantage of minimizing the occurrence of abrasion due to friction.

The effects of the present invention are not limited to the aforementioned effect, and other effects not mentioned above will be clearly understood to those skilled in the art from the description of the appended claims.

### Description of Drawings

FIG. 1 is a perspective view illustrating a state in which a pipe is connected using a connector provided with a sealing member according to an embodiment of the present invention;
FIG. 2 is a perspective view illustrating a state of the sealing member according to the embodiment of the present invention;
FIG. 3 is a cross-sectional view illustrating a cross-section A-A in a state in which the sealing member according to the embodiment of the present invention is inserted into the connector;
FIG. 4 is a view illustrating a height according to a position of a protrusion in the sealing member according to the embodiment of the present invention;
FIG. 5 is a graph showing a change in height according to a position of a protrusion in the sealing member according to the embodiment of the present invention;
FIG. 6 is a cross-sectional view illustrating a state of projecting an outer end and an inner end of the protrusion simultaneously in the sealing member according to the embodiment of the present invention; and
FIG. 7 is a view illustrating a modified form of the sealing member of the present invention.

### Modes of the Invention

Hereinafter, a preferred embodiment of the present invention, of which an object of the present invention may be realized in detail, will be described with reference to the accompanying drawings. In describing the embodiment, like names and like reference numerals will be used with respect to like components and the resulting additional description will be omitted.

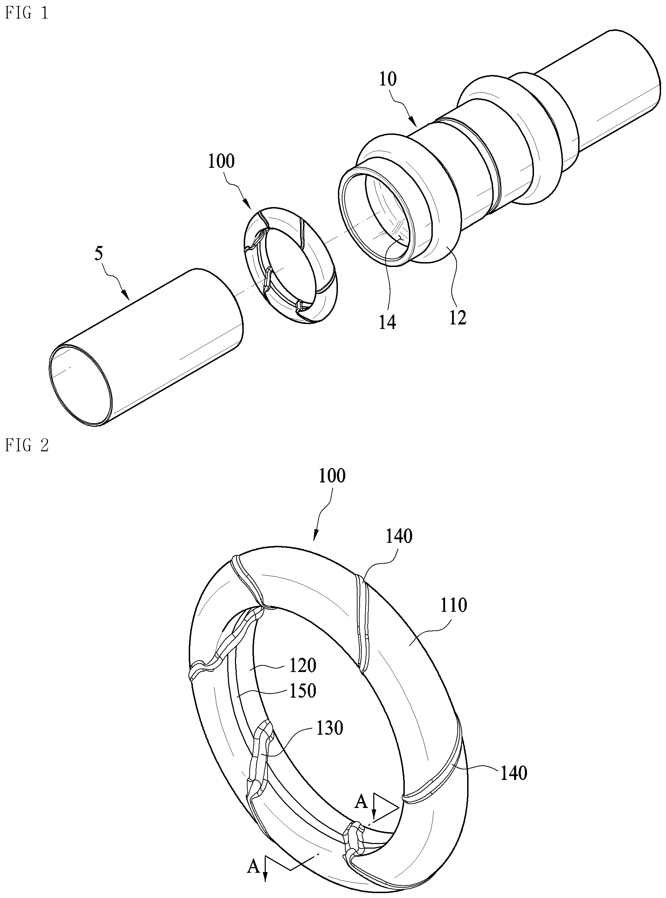

FIG. 1 is a perspective view illustrating a state in which a pipe 5 is connected using a connector 10 provided with a sealing member 100 according to an embodiment of the present invention.

As illustrated in FIG. 1, the sealing member 100 is provided inside the connector 10 for connecting the pipe 5. In addition, when the pipe 5 is inserted into the connector 10, the sealing member 100 prevents a fluid flowing inside the pipe 5 from being leaked.

At this time, in the embodiment, the connector 10 has a large diameter portion 12 having a larger diameter than other portions, and an accommodation groove 14 in which the sealing member 100 is accommodated is formed inside the large diameter portion 12. That is, the sealing member 100 according to the present invention performs a water stop function by simultaneously pressing the pipe 5 and the inner surface of the large diameter portion 12 while being inserted into the accommodation groove 14.

Hereinafter, the sealing member 100 of the present invention will be described in detail with reference to FIGS. 2 to 4.

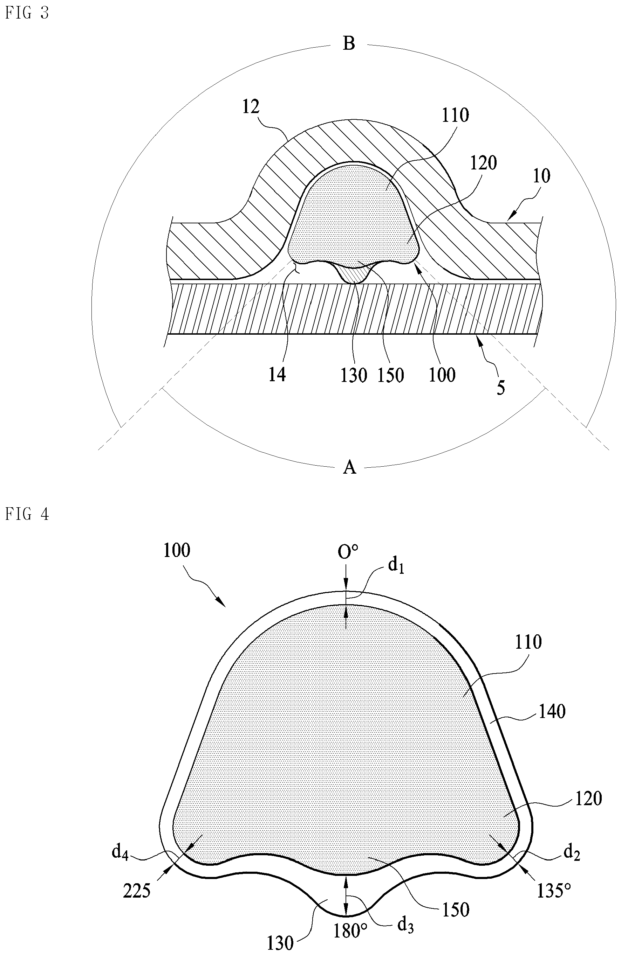

FIG. 2 is a perspective view illustrating a state of the sealing member 100 according to the embodiment of the present invention, FIG. 3 is a cross-sectional view illustrating a cross-section A-A in a state in which the sealing member 100 according to the embodiment of the present invention is inserted into the connector 10, and FIG. 4 is a view illustrating a height according to a position of a protrusion in the sealing member 100 according to the embodiment of the present invention.

As illustrated in FIG. 2, the sealing member 100 according to the embodiment of the present invention includes a body part 110, wing parts 120, an inner protrusion 130, an outer protrusion 140, and a sealing part 150.

As described above, the body part 110 is provided between the outer surface of the pipe 5 and the inner surface of the connector 10 into which the pipe 5 is inserted, and formed to extend along the circumferential direction thereof. That is, the body part 110 is formed in a ring shape as a whole.

Meanwhile, in general, the body part 110 may have a circular cross section, but in the present invention, the body part 110 is configured to have a curved shape together with the wing parts 120 to be described below and formed to have a uniform cross-sectional area as a whole.

In the embodiment, the body part 110 is made of a material having elasticity to surround the outer surface of the pipe 5 in the connector 10 and configured so that the pressure is applied in a central direction of the pipe 5 by a restoring force. That is, it is preferable that the size of the body part 110 is formed relatively smaller than that of the outer diameter of the pipe 5 to surround the circumference thereof by forcibly fitting.

Meanwhile, the wing parts 120 are formed to protrude from the body part 110 to come into contact with the outer surface of the pipe 5, and are deformed by the pressure together with the body part 110 and configured in the form of surrounding the pipe 5.

Specifically, the wing parts 120 protrude from an area in contact with the outer surface of the pipe 5 on the body part 110 and are spaced apart from each other at both sides along the width direction of the body part 110. Here, the wing parts 120 are formed in a pair to be spaced apart from each other to have a triangular cross section as illustrated in FIG. 3, and a protruding end comes into linear contact with the outer surface of the pipe 5.

At this time, the wing parts 120 have a uniform cross-sectional shape like the body part 110 and are formed integrally with the body part 110 to be configured in a ring shape. Accordingly, each of the wing parts 120 comes in linear contact with the outer surface of the pipe 5 while being spaced apart from each other.

In addition, the wing parts 120 are pressed in the central direction of the pipe 5 together with the body part 110 by the connector 10 described above and deformed to come in close contact with each other. Herein, since the wing parts 120 are formed to be elongated along the longitudinal direction of the body part 110 as described above and a pair thereof is spaced apart from each other, the wing parts 120 may doubly block the outer surface of the pipe 5.

Next, the inner protrusion 130 is formed to protrude from the body part 110 separately from the wing parts 120, and at least one or more protrusions are provided to protrude. Herein, the inner protrusion 130 is formed to protrude toward the outer surface of the pipe 5 in a first region A between the pair of wing parts 120.

Specifically, at least one or more inner protrusions 130 may be formed to protrude in the first region A and may be disposed in a straight, oblique, or spiral shape along the longitudinal direction of the body part 110. In this case, the inner protrusion 130 is disposed to be compressed in contact with the outer surface of the pipe 5 separately from the wing parts 120 and to be changed in shape.

In the embodiment, the inner protrusion 130 is formed relatively smaller than the wing parts 120 as illustrated in the drawing, and formed to protrude from the first region A to surround at least a portion of the wing parts 120 together. Here, the inner protrusion 130 is formed in a spiral shape in the first region A and is formed in a shape connecting both sides of the wing parts 120.

In addition, a part of the inner protrusion 130 may be formed to surround the circumference thereof even in a part of the wing parts 120. Accordingly, the inner protrusion 130 is configured to form a spiral orbit by being continuously connected with the outer protrusion 140 to be described below.

The outer protrusion 140 is formed to protrude from the body part 110 separately from the inner protrusion 130, and provided on a second region B along a long length (long circumference) of the body part 110 based on the wing parts 120.

Specifically, the outer protrusion 140 protrudes from the body part 110 and is disposed in the second region B, and is configured to come into contact with the inner surface of the connector 10. Here, like the inner protrusion 130, at least one or more outer protrusions 140 are disposed to be spaced apart from each other and may be formed in a straight, oblique, or spiral shape. In addition, the outer protrusion 140 is configured in the form of connecting the wing parts 120 on the second region B.

In the embodiment, the outer protrusion 140 is formed in a spiral shape in the second region B as illustrated in the drawing to connect the wing parts 120. In this case, a plurality of outer protrusions 140 are spaced apart from each other along the longitudinal direction of the body part 110 and formed in a similar shape to the outer protrusion 140 described above.

As such, the inner protrusion 130 and the outer protrusion 140 are formed to protrude from the body part 110 separately, and provided in the first region A and the second region B in which the circumference of the body part 110 is divided based on the wing parts 120, respectively.

Meanwhile, the inner protrusion 130 and the outer protrusion 140 according to the present invention are each independently disposed in the first region A and the second region B, and are spirally connected to each other so as to form an endless orbit.

Specifically, the inner protrusion 130 and the outer protrusion 140 are connected to each other on the wing parts 120, and the inner protrusion 130 and the outer protrusion 140 are formed in a spiral shape continuously along the body part 110 and the circumference of the wing parts 120. Here, the inner protrusion 130 and the outer protrusion 140 may be additionally formed to protrude even in at least a part of the wing parts 120.

Accordingly, the outer protrusions 140 and the inner protrusions 130 are continuously repeatedly disposed and come into linear contact with the outer surface of the pipe 5 and the inner surface of the connector 10 along the circumference thereof, respectively. That is, the outer protrusion 140 and the inner protrusion 130 have a shape connected to one over the entire circumference of the body part 110 and the wing parts 120, and pass through the body part 110 and the wing parts 120 every predetermined distance. In this case, the inner protrusion 130 and the outer protrusion 140 are connected one by one as a spiral cycle, and one spiral cycle may be set to various lengths according to a design.

As described above, the inner protrusion 130 and the outer protrusion 140 according to the present invention are provided in the first region A and the second region B, respectively, and are continuously repeatedly connected to each other in a spiral form to surround the body part 110 and the wing parts 120.

Therefore, as illustrated in FIG. 3, while the sealing member 100 according to the embodiment of the present invention is accommodated in the accommodation groove 14 of the connector 10, the inner protrusion 130 comes into contact with the outer surface of the pipe 5.

In the case of FIG. 3, since the inner protrusion 130 shows a cross-section A-A passing between the wing parts 120 in the first region A, the inner protrusion 130 comes into contact with the outer surface of the pipe 5. In addition, in a cross section of the other section, which is not illustrated, the protruding directions of the inner protrusion 130 and the outer protrusion 140 will be formed differently, and at this time, the outer protrusion 140 or the inner protrusion 130 will also be formed to come into contact with the inner surface of the accommodation groove 14 or the outer surface of the pipe 5.

In particular, in the embodiment, since only the inner end of the entire length of the inner protrusion 130 comes into contact with the outer surface of the pipe 5, the contact area between the sealing member 100 and the pipe 5 excluding the wing parts 120 is formed to be extremely small. Accordingly, it is possible to minimize the occurrence of abrasion due to friction along the movement of the pipe 5.

Therefore, since the contact area with the pipe 5 by the inner protrusion 130 is extremely small, the inner protrusion 130 is configured with the wing parts 120 in the first region A to reduce the burden on precision processing and have an advantage of generating little variation in quality.

As such, the sealing member 100 of the present invention minimizes the contact area with the pipe 5, but the outer protrusion 140 or the inner protrusion is formed to come into contact with the inner surface of the accommodation groove 14 or the pipe 5, thereby performing a water stop function stably.

Meanwhile, the sealing part 150 is configured to subsidiarily perform the water stop of the pipe 5 together with the wing parts 120, and at least one or more sealing parts 150 are configured between the wing parts 120 on the body part 110 to protrude toward the pipe 5.

Specifically, the sealing parts 150 are formed to be elongated along the longitudinal direction of the body part 110 on the body part 110, like the wing parts 120, to come into contact with the pipe 5. Here, the sealing part 150 comes into linear contact with the outer surface of the pipe 5 together the wing parts 120, and when an external force is applied later, the sealing part 150 is deformed together with the wing parts 120, the inner protrusion 130, and the outer protrusion 140 to water-stop the outer surface of the pipe 5.

In the embodiment, the sealing part 150 is configured as one to protrude between the wing parts 120, has the same cross-sectional shape, and is disposed to be elongated along the body part 110. In this case, the sealing part 150 is configured as one to be elongated, but unlike this, a plurality of body parts 110 may be formed between the wing parts 120.

When a plurality of sealing parts 150 is formed, it is preferable that the sealing parts 150 are disposed to be spaced apart from each other in the first region A and each independently formed to be elongated along the body part 110.

As such, the sealing part 150 is configured to come into contact with the pipe 5 together with the wing parts 120, thereby performing a water stop role. Here, the sealing part 150 is formed with the inner protrusion 130 in a partial section along the longitudinal direction as illustrated in the drawing.

As illustrated in the drawing, the sealing part 150 is configured to pass through the inner protrusion 130 disposed in a spiral shape, and the inner protrusion 130 is formed to additionally protrude from the sealing part 150.

In addition, the protruding height of the sealing part 150 may be formed to be relatively lower than that of the wing parts 120. As illustrated in the drawing, when the pipe 5 and the wing parts 120 come into contact with each other, the sealing part 150 performs a secondary blocking role to subsidiarily prevent leakage of water together with the wing parts 120. Of course, unlike this, the sealing part 150 may have the same protruding height as the wing parts 120 or may protrude relatively larger than the wing parts 120 according to the shape, size, or use of the pipe 5.

As described above, the sealing member 100 according to the present invention comes into close contact with the pipe 5 through the wing parts 120 and the sealing part 150 protruding from the body part 110 to stop water. Additionally, the sealing member 100 may completely block between the pipe 5 and the connector 10 through the inner protrusion 130 and the outer protrusion 140.

Next, the sealing member 100 according to the present invention will be described in more detail with reference to FIGS. 4 to 6.

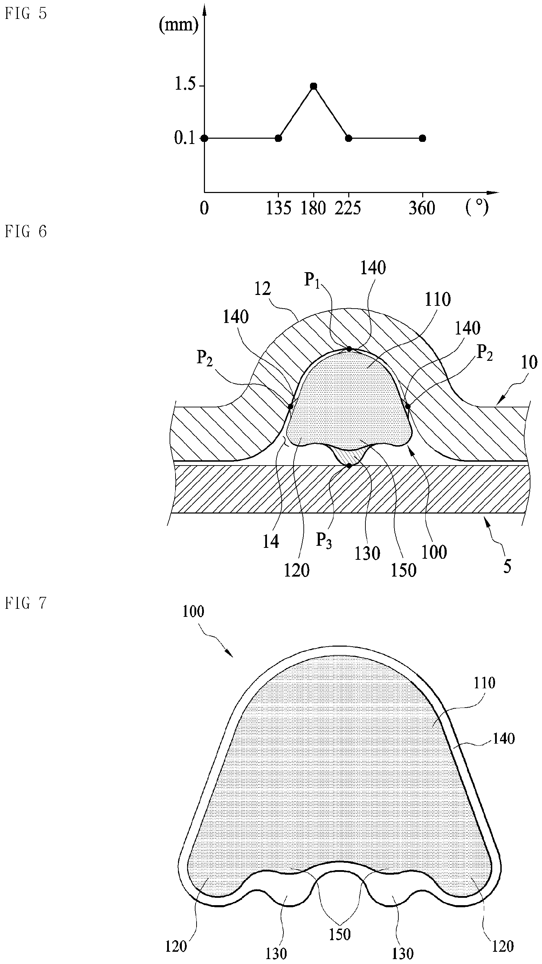

FIG. 4 is a view illustrating a height according to a position of a protrusion in the sealing member 100 according to the embodiment of the present invention, FIG. 5 is a graph showing a change in height according to a position of a protrusion in the sealing member 100 according to the embodiment of the present invention, and FIG. 6 is a cross-sectional view illustrating a state of projecting an outer end and an inner end of the protrusion simultaneously in the sealing member 100 according to the embodiment of the present invention.

As illustrated in FIG. 4, the inner protrusion 130 may protrude so that a central height d3 between the wing parts 120 is higher than heights d1 and d4 of both ends thereof.

More specifically, in the embodiment, the height connected from both ends of the inner protrusion 130 to the outer protrusion 140, that is, the inner protrusion 130 has a relatively higher protruding height than the outer protrusion 140.

In addition, the heights d2 and d4 of the parts formed on the wing parts 120 at both ends of the inner protrusion 130 are formed equally to the height d1 of the outer protrusion 140.

As illustrated herein, the inner protrusion 130 is formed such that the protruding height is gradually increased from both ends toward the center thereof.

Based on FIG. 4, when the upper position of the outer protrusion 140 is 0°, the position of the wing part 120 formed on the right side in the clockwise direction is 135°, the central position of the inner protrusion 130 is 180°, and the position of the wing part 120 formed on the left side is 225°, changes in the protruding height thereof are as shown in a graph of FIG. 5.

The outer protrusion 140 of the sealing member 100 according to the embodiment has a uniform protruding height and is connected to the wing parts 120 so that there is no change in height, and in the case of the inner protrusion 130, the height thereof is linearly increased toward the center from both ends where the wing parts 120 are located. At this time, in the case of the embodiment, the heights of both ends of the outer protrusion 140 and the inner protrusion 130 are set to 1.5 mm, and the height of the central portion of the inner protrusion 130 is set to 0.1 mm.

However, this is one embodiment, and of course, the shapes and the change in height of the inner protrusion 130 and the outer protrusion 140 may be different from those of the embodiment. That is, the inner protrusion 130 and the height of the inner protrusion 130 may be variously formed, and in particular, various shapes such that a change in height from both ends to the central portion of the inner protrusion 130 is non-linearly formed may be implemented.

As described above, since the inner protrusion 130 and the outer protrusion 140 have a difference in protruding height according to a position, the pipe 5 and the connector 10 may be stably blocked.

Referring to FIG. 6, as described above, in the embodiment, the height of the central portion of the inner protrusion 130 is formed to be higher than the heights of both ends thereof and the outer protrusion 140. The reason for doing this is to further improve the water stop force.

Specifically, the sealing member 100 is pressurized in a state provided between the pipe 5 and the connector 10, thereby causing deformation. At this time, in the body part 110 of the sealing member 100, the wing parts 120, the inner protrusion 130, and a portion where the inner protrusion 130 is not formed are also deformed to come into contact with the inner surface side of the accommodation groove 14. Accordingly, three contact points PI, P2, and P3 are formed by the outer protrusion 140 over the circumference of the sealing member 100, and a contact point is additionally formed by deformation of the body part 110.

That is, in the second region B along the circumference of the sealing member 100, a contact due to deformation may occur even at a point other than the outer protrusion 140, and at most points, three or more contact points with the inner surface of the accommodation groove 14 are formed.

On the other hand, in the case of the first region A of the sealing member 100, as a portion in contact with the pipe 5, only one contact point of the inner protrusion 130 formed on the wing parts 120 and the sealing part 150 is formed. That is, since the pipe 5 comes into contact with only the first region A of the sealing member 100, it is necessary to increase the strength of the inner protrusion 130 compared to other portions.

Of course, when the wing parts 120 are formed relatively higher than the sealing part 150 in the body part 110, the body part 110 is configured to have two contact points, but also, the number of contact points with the pipe 5 is smaller than the number of contact points with the connector 10.

Accordingly, since the inner protrusion 130 is formed to be relatively higher than the outer protrusion 140, the overall thickness becomes larger even if the deformation caused by the compression occurs, thereby increasing the water stop force.

In addition, even if the sealing member 100 according to the embodiment of the present invention is a region without the inner protrusion 130, the sealing member 100 comes into contact with the pipe 5 by the sealing part 150 and the wing parts 120 in multiple to be stably in contact with the pipe 5. Here, the inner protrusion 130 is deformed together when the sealing member 150 is formed to have a relatively smaller size than the wing parts 120 so that the sealing part 150 and the wing parts 120 are compressed toward the pipe 5.

For this reason, in the case of the embodiment, the height of the inner protrusion 130 is formed to be higher than that of the outer protrusion 140, thereby improving the water stop force.

Next, a modified form of the sealing member 100 according to the present invention will be described with reference to FIG. 7.

As shown in the drawings, the basic shape is similar as illustrated, but a plurality of sealing parts 150 formed between the wing parts 120 is configured. As described above, the sealing part 150 is formed to be elongated along the longitudinal direction of the body part 110, and like the embodiment, when a pair of sealing parts is configured, each of the sealing parts 150 is elongated in a state spaced apart from each other.

In this case, the sealing part 150 is formed only in the first region A to increase the contact points with the pipe 5 together with the wing parts 120. In addition, the inner protrusion 130 is provided in a spiral shape on the pair of sealing parts 150 to further increase the sealing performance.

A prepared embodiment of the present invention has been as described above and in addition to the embodiments described above, a fact that the present invention can be materialized in other specific forms without departing from the gist or scope thereof will be apparent to those skilled in the art. Therefore, the aforementioned embodiments are not limited but should be considered to be illustrative, and accordingly, the present invention is not limited to the above description and may be modified within the scope of the appended claims and a range equivalent thereto.

Explanation of Reference Numerals and Symbols

| | |
|---|---|
| 5: Pipe | 10: Connector |
| 12: Large diameter portion | 14: Accommodation groove |
| 100: Sealing member | 110: Body part |
| 120: Wing parts | 130: Inner protrusion |
| 140: Outer protrusion | 150: Sealing part |
| A. First region | B: Second region |

## Claims

1. A sealing member for pipe connection comprising:
a body part disposed between the outer surface of a pipe and the inner surface of a connector into which the pipe is inserted, and formed to extend along the circumferential direction thereof in a ring shape; and
wing parts formed on the body part to protrude from areas, which come in contact with the outer surface of the pipe, and disposed along both sides of the width direction of the body part to be spaced apart from each other,
wherein the wing parts are configured to be deformable by external force in a state where each of the wing parts is in linear contact with the outer surface of the pipe.

2. The sealing member for pipe connection of claim 1, wherein the wing parts are formed to be elongated along the longitudinal direction of the body part.

3. The sealing member for pipe connection of claim 1, further comprising an inner protrusion positioned in a first region between the wing parts in the body part and formed to protrude in the outer surface direction of the pipe.

4. The sealing member for pipe connection of claim 3, wherein at least one or more inner protrusions are configured to be spaced apart from each other.

5. The sealing member for pipe connection of claim 3, wherein the inner protrusion is formed such that a protruding height thereof is gradually increased toward the center from the wing parts on both sides.

6. The sealing member for pipe connection of claim 3, further comprising an outer protrusion protruding from a second region in contact with the inner surface of the connector on the body part and formed along the longitudinal direction of the body part.

7. The sealing member for pipe connection of claim 6, wherein the inner protrusion and the outer protrusion form an endless orbit, surround the circumference of the wing parts together, and are connected to each other in a spiral shape to be formed along the outer surface of the body part.

8. The sealing member for pipe connection of claim 6, wherein the protruding height of the inner protrusion is relatively larger than that of the outer protrusion on the body part.

9. The sealing member for pipe connection of claim 1, further comprising at least one sealing part configured between the wing parts to protrude toward the pipe.

10. The sealing member for pipe connection of claim 9, wherein the sealing parts have the same cross-sectional shape, and are formed to be elongated along the longitudinal direction of the body part.

11. The sealing member for pipe connection of claim 9, wherein the protruding height of the sealing part is formed to be relatively higher than that of the wing parts.
